(19) Europäisches Patentamt
European Patent Office
Office européen des brevets

(11) **EP 4 745 563 A1**

(12) **EUROPEAN PATENT APPLICATION**

(43) Date of publication:
**20.05.2026 Bulletin 2026/21**

(21) Application number: **24306930.9**

(22) Date of filing: **18.11.2024**

(51) International Patent Classification (IPC):
**G01N 21/64** (2006.01)

(52) Cooperative Patent Classification (CPC):
**G01N 21/643; G01N 21/6486;** G01N 2021/6419;
G01N 2021/6421; G01N 2201/0221;
G01N 2201/1296

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TotalEnergies OneTech
92400 Courbevoie (FR)**
• **Centre National de la Recherche Scientifique
75016 Paris (FR)**
• **Université de Pau et des Pays de l'Adour
64000 Pau (FR)**

(72) Inventors:
• **PEREIRA, Cecile
Palaiseau (FR)**
• **RAMBEAU, Odile
Pau (FR)**
• **PIGOT, Thierry
MORLAAS (FR)**
• **BATILLOT, Alexis
Louhossoa (FR)**

(74) Representative: **Bandpay & Greuter
11 rue Christophe Colomb
75008 Paris (FR)**

(54) **ASSESSING QUALITY OF A WATER SAMPLE**

(57) The disclosure notably relates to a computer-implemented method for assessing quality of a water. The assessing method comprises obtaining an autoencoder trained on a dataset that consists exclusively of training examples respective to drinkable water samples. The assessing method also comprises obtaining measurement data. The assessing method also comprises applying the autoencoder to the measurement data, thereby obtaining reconstructed data. The assessing method also comprises computing a reconstruction error the measurement data and the reconstructed data. The assessing method also comprises comparing the reconstruction error to one or more thresholds. The assessing method also comprises determining a level of quality of the input water sample, based on the comparison. This provides an improved solution for assessing quality of a water sample.

## Description

### TECHNICAL FIELD

The disclosure relates to the field of computer programs and systems, and more specifically to methods, systems and programs for assessing quality of a water sample.

### BACKGROUND

Traditional solutions for assessing water usability and quality usually involve a long process requiring specialized laboratories and several different analysis and tests, often consisting of several days of work and specialized equipment. The analysis of water quality in such solutions involves the assessment of various physical, chemical, and biological parameters. In recent years, machine-learning approaches were introduced. These approaches provide indications of water usability and quality using only a small proportion of the tests and equipment previously required. However, existing machine-learning approaches need extensive datasets comprising results of analyses of water samples of all kinds. In particular, these machine-learning approaches require results of analyses of water samples with the different pollutants that may contaminate the water. In the absence of such data, the algorithms may be unable to detect said pollutants and thereby to distinguish drinkable water from non-drinkable water.

Whitin this context, there is still a need for an improved solution for assessing quality of a water sample.

### SUMMARY

It is therefore provided a computer-implemented method for assessing usability of a water sample (hereinafter called "assessing method").

The assessing method comprises obtaining an autoencoder. The autoencoder has been trained on a dataset comprising training examples. Each training example comprises a ground truth value of one or more predetermined physical parameters for a respective drinkable water sample. The dataset consists exclusively of training examples respective to drinkable water samples. The assessing method also comprises obtaining measurement data. The measurement data comprise a measurement value of the one or more predetermined physical parameters for an input water sample. The assessing method also comprises applying the autoencoder to the measurement data. The method thereby obtains reconstructed data. The assessing method also comprises computing a reconstruction error between the measurement data and the reconstructed data. The assessing method also comprises comparing the reconstruction error to one or more thresholds. The assessing method also comprises determining a level of quality of the input water sample, based on the comparison.

The assessing method may comprise one or more of the following:

- the autoencoder is a variational autoencoder (VAE);
- the one or more predetermined physical parameters include one or more optical parameters;
- the one or more optical parameters include one or more spectrometry parameters;
- the one or more spectrometry parameters include one or more fluorescence parameters;
- the one or more fluorescence parameters include fluorescence spectra with respect to one or more LEDs;
- the number of LEDs is higher than or equal to 2, and/or lower than or equal to 6;
- the one or more fluorescence parameters include an excitation-emission matrix obtained by fluorescence spectroscopy;
- the one or more predetermined physical parameters include temperature, conductivity, turbidity, redox potential, or a combination thereof;
- the one or more thresholds comprise a first threshold and a second threshold, the second threshold being higher than the first threshold, the input water sample being determined to be drinkable when the reconstruction error is below the first threshold, the input water sample being determined to be usable for irrigation and/or surface cleaning when the reconstruction error is above the first threshold and below the second threshold, and the input water sample being determined to not be

drinkable and not be usable for either or both of irrigation and surface cleaning when the reconstruction error is above the second threshold;

- the reconstruction error is a function of a mean square error and/or of a mean absolute error; and/or
- at least one of the one or more thresholds is equal to a sum between:

○ a mean value of reconstruction errors over at least part of the dataset, and
○ a standard deviation of reconstruction errors over the at least part of the dataset multiplied by a factor higher than or equal to 0.5 and/or lower or equal to 20.

It is further provided a method for machine-learning an autoencoder (hereinafter called "machine-learning method").

The autoencoder of the machine-learning method is usable in a method for assessing quality of a water sample according to the assessing method. The machine-learning method comprises obtaining a dataset. The dataset comprises training examples. Each training example comprises a ground truth value of one or more predetermined physical parameters for a respective drinkable water sample. The dataset consists exclusively of training examples respective to drinkable water samples. The machine-learning method also comprises training the autoencoder based on the dataset.

It is further provided a computer program comprising instructions for performing the assessing method and/or the machine-learning method.

It is further provided a device comprising a data storage medium having recorded thereon the computer program and/or the autoencoder.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 shows a flowchart of an example of the assessing method;
- FIG. 2 shows a flowchart of an example of the machine-learning method;
- FIG.s 3-19 illustrate implementations of the methods and programs of the present disclosure; and
- FIG.s 20 and 21 show examples of the system.

## DETAILED DESCRIPTION

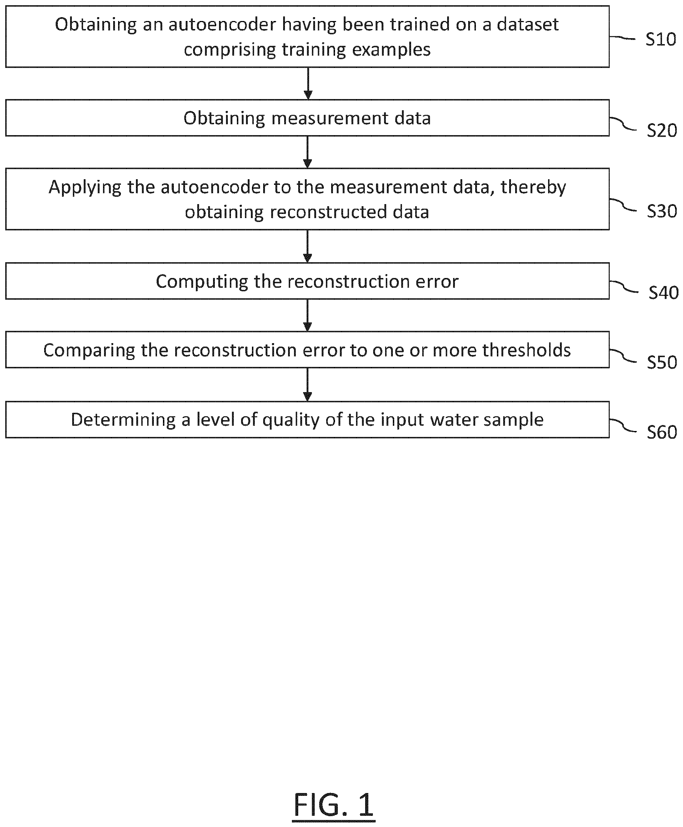

With reference to the flowchart of FIG. 1, it is proposed a computer-implemented method for assessing quality of a water sample. The assessing method comprises obtaining S10 an autoencoder. The autoencoder has been trained on a dataset comprising training examples. Each training example comprises a ground truth value of one or more predetermined physical parameters for a respective drinkable water sample (e.g., each predetermined physical parameter being obtained as a result of using a respective measuring device on the water sample). The dataset consists exclusively of training examples respective to drinkable water samples (i.e., ground truth values for drinkable water sample only). The assessing method also comprises obtaining S20 measurement data. The measurement data comprise a measurement value of the one or more predetermined physical parameters for an input water sample. The assessing method also comprises applying S30 the autoencoder to the measurement data (i.e., encoding the measurement data and decoding the encoded data, both with the autoencoder). The method thereby obtains reconstructed data. The assessing method also comprises computing S40 a reconstruction error between the measurement data and the reconstructed data (e.g., a mean square error or "MSE" between the two vectors). The assessing method also comprises comparing S50 the reconstruction error to one or more thresholds. The assessing method also comprises determining S60 a level of quality of the input water sample, based on the comparison.

The assessing method constitutes an improved solution for assessing quality of a water sample.

Notably, the assessing method provides a fast and efficient way to assess the quality and thus usability of a water sample. Indeed, as autoencoders are extremely efficient in terms of inference, the assessing method may be implemented in most computing devices, such as for example, most personal computers, mobile phones and/or tablets. The results (i.e., the water quality level) may be outputted to the user in real time, that is, within a few seconds, or even fractions of a second, e.g., from the moment the measurement data of the water sample are obtained at S20 and/or the applying S30 is launched.

Additionally, or alternatively, the assessing method may be included in a water treatment method. A water treatment method may include executing the assessing method, thereby obtaining at S60 a level of quality of the input water sample, and further comprise performing a water treatment step based on the level of quality outputted at S60 by the method. A water treatment step may comprise filtration to remove particles, disinfection to kill or inactivate harmful microorganisms, and/or chemical adjustments to neutralize any hazardous substances. A water treatment method may further include, after a water treatment step, executing again the assessing method, thereby obtaining at S60 a level of quality of the input water sample after the water treatment step. Therefore, the assessing method may be used to obtain an indication of the efficacy of the water treatment step, by comparing the water quality level prior and after water treatment. The water treatment method may include providing a minimal level of quality of water sample and an iterative process. The iterative process may comprise first assessing quality of a water sample, then, if said level of quality is lower than the minimal level of quality, applying a water treatment step (such as, the above-mentioned step) to the water sample, then assessing quality of the treated water sample, and continuing the iterations until the minimal level of quality is reached.

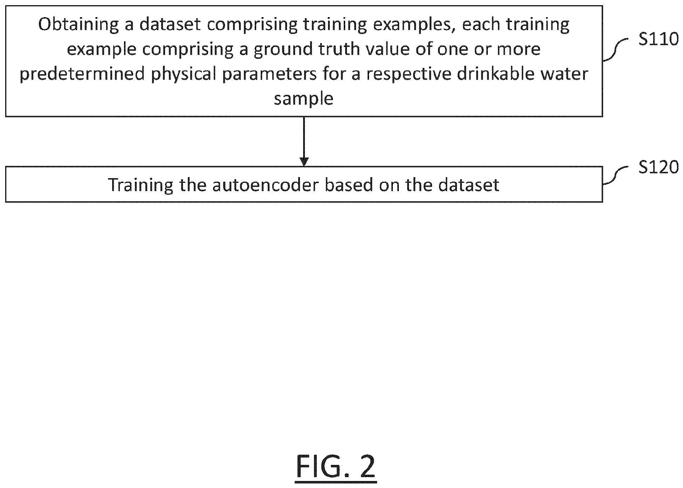

With reference to the flowchart of FIG. 2, it is also proposed a method for machine-learning the autoencoder obtained at S10. The machine-learning method comprises obtaining S110 a dataset as above-described. The dataset thus comprises training examples as above described, each training example comprising a ground truth value of the one or more predetermined physical parameters for a respective drinkable water sample. The dataset consists exclusively of training examples respective to drinkable water samples. The machine-learning method also comprises training the autoencoder based on the dataset S120.

The machine-learning method thus comprises training an autoencoder on a dataset consisting only of measurement data obtained from drinkable water samples. By using measurement data coming only from drinkable water samples, the trained autoencoder may detect the intrinsic properties and patterns of drinkable water. Thus, the autoencoder may consider any data coming from a water sample contaminated with a pollutant as an outlier. That is, the autoencoder does not need data about each of the possible existing pollutants, as in previous art approaches. Therefore, the assessing method is robust with respect to new (e.g., unknown) pollutants.

The assessing method is for assessing the quality of a water sample. That is, the assessing method takes as an input a trained autoencoder (obtained at S10) and measurement data (obtained at S20) of an input water sample, and automatically (e.g., by a system) determines a level of quality of the input water sample S60 through the steps S30, S40, and S50. The assessing method may, after S60, output the determined level of quality of the input water sample and may further show the output on a display, store it in a file, send it to a server, and/or further use it in any manner.

The obtaining S10 may comprise retrieving (e.g., from local or remote memory) or receiving (e.g., from a remote system) the autoencoder, and/or the autoencoder is predetermined (i.e., already trained). The assessing method may be repeated for a plurality of different input water samples. In such a case, the autoencoder obtained at S10 for each input water sample may be the same. A process may comprise storing the trained autoencoder obtained at S120 and applying the same trained autoencoder at S30 for a plurality of different input water samples.

The obtaining S20 may comprise obtaining the input water sample and acquiring the measurement data using one or more measurement devices, or retrieving from (e.g., local or distant) memory or receiving (e.g., from a remote system) measurement data having been thereby acquired. The input water sample may come from any source of freshwater, such as a river, a stream, a lake, groundwater, and/or rainwater. For example, the obtaining S20 may include obtaining the measurement data from a laboratory equipped with appropriate instrumentation and/or methodologies.

Additionally or alternatively, the obtaining S20 may comprise using a portable measurement device (e.g., a handheld device) and capturing the measurement data of the input water sample with the measurement device, or retrieving/receiving measurement data having been captured in such manner. The obtaining S20 may comprise extracting the input water sample from a source of freshwater (such as the previously mentioned ones) and processing the input water sample with the portable physical measurement device to obtain the measurement data. The obtaining S20 may be performed at any location, for example, near the source of freshwater (e.g., within a maximal distance of 25 meters). Hence, the assessing method may provide a way to assess, directly onsite, the water quality level of water sources. This may, for example, be beneficial in assessing the water quality level of a river (e.g., at various locations of the river), without having to transport and label the different water samples. The assessing method may also be advantageous in places without access to laboratories, giving valuable information about the quality of water.

By "level of quality" of a water sample, it is meant an indication of the safe usability of the water sample (in other words, the safeness of a certain use of the water sample). The level of quality determined at S60 may belong to a predetermined finite set of values, e.g., three or more values. The set of values may include a value indicating whether the water sample is drinkable, at least one value indicating whether the water sample is usable, and/or a value indicating whether the water sample is not for any use (i.e., too polluted). The level of quality may give an indication of the amount of pollutant that may be present in the water sample. "Drinkable", herein, means that the water may be safely drunk by people, for example, in copious quantities without getting sick, without referring to any specific norm. Similarly, "usable" means that the water may be used in vast quantities and contact soil, without negatively impacting soil (that is, without incurring a too significant pollution), without referring to any specific norm (e.g., without obtaining polluted food, and/or without having the plants dying).

The at least one value indicating whether the water sample is usable may indicate whether the water sample is usable for irrigation (e.g., in agriculture, on a golf course, in a garden and/or on a sports field) and/or surface cleaning (e.g., to clean a vehicle, streets, and/or buildings). Thus, "usable for irrigation" means that the water may be used for irrigation in vast quantities without negatively impacting the health of the plants, without referring to any specific norm (e.g., without having the plants getting sick or dying). When the irrigation is used in agriculture, this means that the water is used without obtaining polluted food, and/or without having the plants dying. Similarly, "usable for surface cleaning" means that the water may be used for cleaning in vast quantities to wash a surface without damaging said surface.

The at least one value may consist of a single value indicating that the water sample is usable for both irrigation and for surface cleaning, or one value indicating that the water sample is usable for irrigation and another value indicating that the water sample is usable for surface cleaning, or any other number of values and combinations of indications.

The measurement data obtained at S20 comprise measurement values of one or more predetermined physical parameters on a water sample. Physical parameters, in this disclosure, refer to measurable physical properties of the water sample that may be quantitatively and/or qualitatively assessed using appropriate instrumentation (e.g., measuring devices) and/or methodologies. The one or more predetermined physical parameters may include one or more optical parameters, one or more spectrometry parameters (e.g., absorption and/or emission spectrometry parameters), one or more fluorescence parameters, temperature, turbidity, electrical conductivity, pH, density, redox potential, or a combination thereof.

The one or more physical parameters may, in particular, include one or more optical parameters. Each optical parameter may be any measurable property related to the interaction of light with the sample. Therefore, the obtaining S20 may comprise, obtaining measurement values of one or more optical parameters. Obtaining measurement values of one or more optical parameters may comprise analyzing the water sample with a measuring device, e.g., a spectrometer. Analyzing the water sample may include obtaining, e.g., absorption, emission, and/or diffusion measurement data. The measuring device (e.g., the spectrometer) may be portable (e.g., handheld) and/or coupled with a separation technique like liquid chromatography. The measurement values may be obtained in real time (e.g., after a few seconds after the obtaining S20), allowing *in situ* analysis. Optical parameters may enable to assess various aspects of water quality and composition, e.g., they may allow to detect a broad variety of biological and chemical contaminants in different concentration ranges. It has been found that the use of optical parameters in the assessment method of FIG. 1 allows to yield a reconstruction error at S40 which can help determine at S60 an accurate level of quality.

The one or more optical parameters may include, in particular, one or more spectrometry parameters. Spectrometry parameters may comprise the components of a spectrum. The spectrum may be obtained with a spectrometer. Therefore, the obtaining S20 may comprise using a spectrometer to perform a spectroscopy on the input water sample, thereby obtaining measurement values of spectrometry parameters, e.g., a spectrum. For example, the spectrometry may be an emission spectrometry.

The one or more spectrometry parameters may include, in particular, one or more fluorescence parameters. The fluorescence parameters may comprise the components of a fluorescence spectrum. A fluorescence spectrum may be obtained with emission spectroscopy. A fluorescence spectrum may be a vector and/or a graph representing the intensity of light emitted by the sample as a function of wavelength or frequency. Therefore, the obtaining S20 may comprise using an emission spectrometer to analyze the input water sample, thereby obtaining measurement values of one or more fluorescence parameters, e.g., a fluorescence spectrum. The fluorescence spectrum may show distinct peaks that correspond to different molecular interactions within the sample. This has revealed to yield a particularly accurate determination of the level of quality.

The one or more fluorescence parameters may include, in particular, one or more fluorescence parameters obtained with one or more spectrometers comprising one or more LEDs. For example, the one or more fluorescence parameters may comprise components of one or more fluorescence spectra (e.g., comprise the entire one or more fluorescence spectra), each of which obtained with a spectrometer using a respective LED as light source. The components may be the specific intensities at the different emission wavelengths. For example, the one or more fluorescence parameters may include components of one or more fluorescence spectra obtained with at least one spectrometer having a LED as light source and/or with at most six spectrometers having a LED as light source. For example, with four spectrometers having four different LED light sources. Thus, the one or more physical parameters may include one or more components (i.e., intensity of light at specific wavelengths) of respective fluorescence spectra. Each fluorescence spectra may be obtained with a spectrometer having a LED as light source. Therefore, the obtaining S20, may comprise using an emission spectrometer having a LED as a light source (e.g., using four spectrometers) to analyze the input water sample, thereby obtaining measurement values of one or more fluorescence parameters, e.g., a fluorescence spectrum. LEDs have considerable advantages, for example, they are cheap to produce and the light coming from a LED may be concentrated on a narrow band of wavelengths, making LEDs practical for use in spectroscopy. A further advantage in using spectrometers using a LED as a light source is that such spectrometers may be handheld devices. It has been found that the use of fluorescence parameter coming from fluorescence spectra obtained with four different LEDs in the assessment method of FIG. 1 allows to yield a reconstruction error at S40 which can help determine at S60 an accurate level of quality, as detailed in the implementation further below in the disclosure.

Additionally or alternatively, the one or more fluorescence parameters may include an excitation-emission matrix obtained by fluorescence spectroscopy. An excitation emission matrix (EEM) may be a 3D scan effectuated with a spectrometer. An EEM may consist of a contour plot of excitation wavelength, emission wavelength and fluorescence intensity. Therefore, the obtaining S20, may comprise using an emission spectrometer to analyze the input water sample, thereby obtaining an EEM. An EEM may contain all the information about each of the fluorescence spectra obtained with respect to all the wavelengths. In particular, an EEM may comprise the fluorescence spectra obtained by the spectrometers using a LED as light source. Hence, using the EEM may increase the amount of measurement data obtained from the water sample, which may increase the accuracy of the assessing method.

The assessing method comprises obtaining S10 a trained autoencoder in order to assess the quality of a water sample. The method of use comprises training the autoencoder. An autoencoder is a specialized neural network designed to compress input data into a lower-dimensional representation and then reconstruct it, capturing its essential features. It consists of two main parts: an encoder, which reduces the input to a compressed form in the latent space (the most compressed representation of the input data), and a decoder, which reconstructs the original input from this compressed form. The encoder consists of a series of hidden layers, each with a decreasing number of neurons, culminating in the latent space. The decoder consists of a series of hidden layers that increase in size until reaching the final output layer, which matches the input layer in size. The training S120 the autoencoder may comprise minimizing a loss function. The loss function may be a mean squared error or a mean absolute error. The loss function may measure the difference between the input and its reconstruction.

The autoencoder of the assessing method and/or the autoencoder learnt by the machine-learning method may be a variational autoencoder (VAE). In said VAE, the encoder outputs vectors that define a probability distribution over the latent space. The distribution may be a Gaussian distribution. This distribution may be characterized by a mean and a variance. The decoder then reconstructs the input data from points sampled according to the probability distribution. The implementation further below in the disclosure comprises a VAE, further showing the efficacy of using a VAE in the methods. The training process S120 may comprise minimizing a loss function. The loss function may be a mean square error or a mean absolute error, and may, optionally, comprise a regularization term called the Kullback-Leibler (KL) divergence.

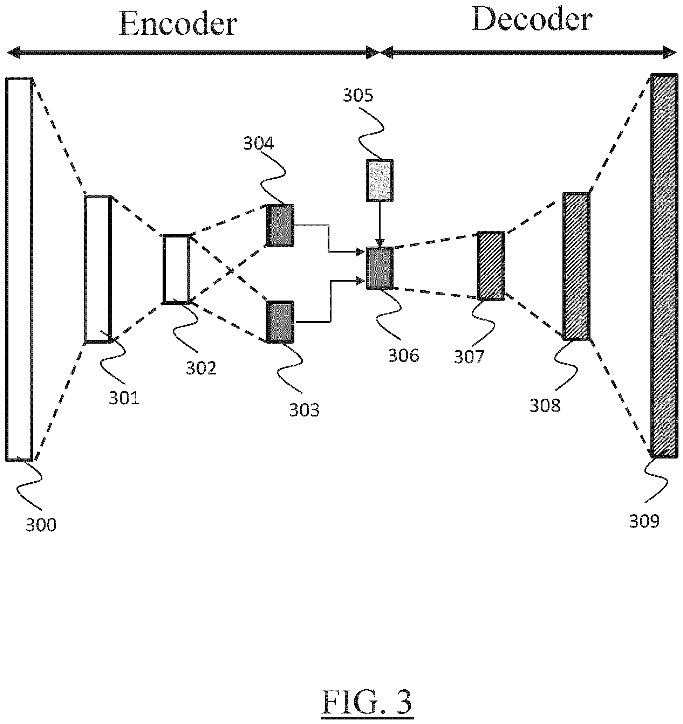

FIG. 3 illustrates an example of a VAE that may be obtained at S10 and trained at S120. The encoder of the VAE has an input space 300. The input space has a dimension equal to the dimension of the training examples used to train the VAE. The encoder of the VAE may have one more hidden states, e.g., one hidden state 301. The VAE has a latent space 302. The encoder of the VAE gives as an output two vectors, a mean vector 304, denoted $\mu$, and a variance vector 303 (or a function of the variance), denoted $\sigma$. A VAE further includes a Gaussian function 305 that may be of mean 0 and variance 1. The VAE further includes combining the Gaussian distribution 305, with the mean 304 and the variance 303 to obtain a distribution 306 on the latent space. Specifically, the distribution 306 follows the formula $\mu + \sigma * x$ where x is a random point according to the Gaussian distribution 305. The VAE also comprises a decoder. The decoder takes as input a point taken according to the distribution 306. The decoder of the VAE may be symmetrical with respect to the encoder: it may have one more hidden states, e.g., one hidden state 307. The decoder of the VAE has an output space 309 of dimension equal to the input space. The VAE may also comprise activation functions, such as leaky ReLU functions.

The autoencoder obtained at S10 has been trained on a dataset comprising a plurality of elements called "training examples". A dataset of which elements comprise a ground truth value of one or more predetermined physical parameters for a respective water sample will be called a "WM-dataset" (water-measurement-dataset). For each WM-dataset one or more physical parameters are fixed (i.e., the predetermined physical parameters). Each of these physical parameters may be of the type discussed above in the disclosure, specifically the physical parameters may include, but are not limited to, one or more optical parameters, one or more spectrometry parameters (e.g., absorption and/or emission spectrometry parameters), one or more fluorescence parameters, temperature, turbidity, electrical conductivity, pH, density, redox potential, or a combination thereof. Therefore, each element of a WM-dataset corresponds to a water sample and may have several entries, one for each of the predetermined physical parameters for the respective water sample. By this, it is meant that the water sample has been analyzed (e.g., by the user, or in a laboratory) to determine a measurement value of the one or more predetermined physical parameters. As known in the art, determining a measurement value of a physical parameter may also involve approximations and errors. By the mention, ground truth, it is meant that the obtained measurement values of the one or more physical parameters are considered correct and the possibility of such approximations and errors is ignored.

In examples, the predetermined physical parameters of a water sample may comprise (e.g., consist of) the fluorescence parameters (e.g., fluorescence spectra) of the water sample, e.g., one or more components of fluorescence spectra of water samples with respect to one or more (e.g., four) emission spectrometers with a LED as light source. Therefore, a WM-dataset may comprise (e.g., consist of) elements (i.e., training examples) of which entries are the specific intensities at the different emission wavelengths. The entries may be components of fluorescence spectra. Each fluorescence spectra may be obtained with a spectrometer having a LED as light source.

The autoencoder obtained at S10 has been trained on a WM-dataset consisting exclusively of training examples corresponding to drinkable water samples. The drinkable water samples may also (for a part thereof or for all of them) be considered drinkable by, e.g., a governmental institution. That is, the water sample may have been analyzed and may satisfy the requirement to be considered drinkable by a governmental institution. For example, the water samples may comply to, e.g., the Directive (EU) 2020/2184.

WM-datasets may be obtained by several methods. The obtaining S110 may comprise retrieving at least part of the WM-dataset from (e.g., local or distant) memory or receiving (e.g., from a remote system) at least part of the WM-dataset having been thereby acquired. The obtaining S110 may comprise obtaining at least part of the WM-dataset by collecting and analyzing a number of water samples. Obtaining the WM-dataset may also include determining whether each of the corresponding water samples is drinkable. Optionally, the assessing method may also comprise obtaining an additional WM-dataset consisting of elements corresponding to non-necessarily drinkable water samples, and using the additional WM-dataset for testing purposes.

The obtaining S110 may comprise normalizing and/or preprocessing a WM-dataset prior to training the autoencoder. For example, the obtaining S110 may include separating a WM-dataset into two parts. A first part (e.g., containing two thirds of the elements) may be used as the training WM-dataset and a second part (e.g., containing the rest of the elements) may be further used for testing the trained autoencoder.

The assessing method further comprises applying S30 the trained autoencoder to the measurement data. The result of applying the trained autoencoder is called the "reconstructed data". The applying S30 comprises first applying the encoder, and, afterwards, applying the decoder on the encoded data.

The assessing method further includes comparing the reconstructed data with the initial measurement, i.e., computing S40 a reconstruction error between the measurement data and the reconstruction data. The computing S40 of a reconstruction error may comprise computing a reconstruction error function. The reconstruction function may be a metric, and the computing S40 may comprise computing the distance (e.g., with the reconstruction function) between measurement data and the reconstruction data. The reconstruction error function may be identical to the loss function used in training the autoencoder at S120, or, alternatively, the reconstruction error function may be a different function. The reconstruction error function may, for example, be a mean square error, a mean absolute error, or any function involving these two error functions. Additionally or alternatively, the reconstruction error may comprise comparing a subset of the reconstructed data (e.g., only considering a subset of the one or more predetermined physical parameters) with the relative subset of the initial measurement data (e.g., considering the same subset of the one or more predetermined physical parameters). The subset may be a sliding window. For example, the reconstruction error may be the maximum of a difference (e.g., an absolute value of the difference) between the reconstructed data and the initial measurement data, the maximum being considered only on a subset of the reconstructed data and the relative subset of the initial measurement data.

The assessing method further comprises comparing S50 the reconstruction error to one or more thresholds and determining S60 a level of quality of the input water sample based on the comparison. For example, the one or more thresholds may comprise a first threshold and one or more other thresholds, each of the one or more other thresholds being higher than the first threshold. The assessing method may output that a water sample is drinkable if the associated reconstruction error is below (i.e., smaller than) the first threshold. In examples, the one or more other thresholds may consist of a single threshold, called the second threshold, and the assessing method may output that the water sample is usable (e.g., for agriculture, irrigation, surface cleaning, or a combination thereof) when the reconstruction error is in between the first and second threshold. Whenever the reconstruction error is above all of the one or more other thresholds (e.g., above the second threshold), the assessing method may output that the water sample is neither drinkable, nor usable (e.g., may output that the water sample is not for any use, that is, polluted). In examples, the one or more other thresholds may comprise a plurality of thresholds, each respective to a possible use of water samples. For example, the assessing method may comprise a threshold relative to agriculture, irrigation, surface cleaning, or combinations thereof. The assessing method may output that a water sample is usable for a given use (e.g., agriculture, irrigation, and/or surface cleaning) whenever the reconstruction error is below the relative threshold. In examples, the assessing method may output that the water samples is usable for several uses (e.g., is usable for agriculture and irrigation). In examples, the assessing method may output only the most restrictive use, e.g., the one corresponding to the lowest threshold that is higher than the reconstruction error.

In an example, the one or more thresholds comprise a first threshold and a second threshold, the second threshold being higher than the first threshold, the input water sample being determined to be drinkable when the reconstruction error is below (e.g., or equal to) the first threshold, the input water sample being determined to be (not drinkable but) usable for irrigation and/or surface cleaning when the reconstruction error is above the first threshold and below (e.g., or equal to) the second threshold, and the input water sample being determined to not be drinkable and not be usable for irrigation and/or not be usable for surface cleaning, when the reconstruction error is above the second threshold.

In an embodiment, when the reconstruction error is above the first threshold and below (e.g., or equal to) the second threshold, whichever the value of the reconstruction error, the input water sample is determined to be (not drinkable but) usable for both irrigation and surface cleaning.

Optionally, the assessing method may be included in a process including such use of water extracted from the water source from which the water sample was taken, for irrigation and/or for surface cleaning.

In this embodiment, when the reconstruction error is above the second threshold, the input water sample is determined to be (not drinkable and) usable neither for irrigation, nor for surface cleaning.

In another embodiment, when the reconstruction error is above the first threshold and below (e.g., or equal to) the second threshold, the method may involve an intermediate threshold above the first threshold and below the second, and the input water sample is determined to be (not drinkable but) usable for irrigation and/or surface cleaning based on a comparison of the reconstruction error with the intermediate threshold.

At least one of the thresholds of S50 may be a mean value of reconstruction errors over at least part of the dataset. The at least part of the dataset may be the entire dataset. Alternatively, the at least part of the dataset may be the dataset without outliers. The outliers may be determined, for example, with the z-score. The z-score is a statistical measure that measures exactly how many standard deviations above or below the mean a data point is. For example the outliers may be any training example of which z-score is higher than a non-negative number, such as 3, or 5. Therefore, at least one of the thresholds of S50 may be a mean value of reconstruction errors over the entire dataset without the outliers.

At least one of the thresholds of S50 may be a sum of the mean value of reconstruction errors over at least part of the dataset (e.g., the mean value determined above) and a standard deviation. The standard deviation may be a standard deviation of reconstruction errors over at least part of the dataset. For example, the standard deviation may be standard deviation of reconstruction errors over the at least part of the dataset used for computing the mean value. For example, the at least part of the dataset may be the entire dataset, or the entire dataset without the outliers. The standard variation may comprise a multiplicative factor. The multiplicative factor may be a factor higher than or equal to 0 and/or lower than or equal to 20 (e.g., 0.5, 0.75, 1, 2, 3, 15). In this way, several thresholds may be determined (e.g., one for drinkable water, and/or one for water usable in agriculture). In the implementation further discussed below in the disclosure, several thresholds are considered.

Additionally or alternatively, the assessing method may also comprise obtaining an additional WM-dataset consisting of elements corresponding to non-necessarily drinkable water samples (e.g., comprising polluted water samples). For example, a given threshold (e.g., the threshold corresponding to drinkable water) may be such that the reconstruction error of almost all (e.g., all, or 95%) of the non-drinkable water samples is higher than the given threshold (e.g., the reconstruction error of all the polluted water samples being higher than the given threshold).

In implementations, the assessing method may comprise one or more methods (e.g., the above described methods) for determining the thresholds. In implementations, the assessing method may comprise testing several thresholds with respect to an additional WM-dataset consisting of elements corresponding to non-necessarily drinkable water samples (thus including non-drinkable water samples) and determining a best threshold as a result of the test. For example, a determined threshold may be the highest threshold such that the reconstruction error of each of the polluted water samples is higher of the determined threshold.

The assessing method may comprise or follow a method for setting the one or more thresholds. The method for setting the one or more thresholds may be based on a data source including both examples respective to drinkable water samples (e.g., including all or part of the training examples of the dataset obtained at S110), examples respective to non-drinkable water samples. Each example comprises a ground truth value of the one or more predetermined physical parameters for its respective water sample, and a label indicating whether the respective water sample is drinkable or not.

Optionally, the examples respective to non-drinkable water samples may include examples respective to water samples usable for irrigation and/or surface cleaning (e.g. for both irrigation and surface cleaning), and examples respective to not be drinkable and not be usable for either or both of irrigation and surface cleaning (e.g., not usable for neither irrigation nor surface cleaning). Such examples may be labelled accordingly.

The method for setting the one or more thresholds may comprise applying the autoencoder to each example of the data source, thereby obtaining a distribution of reconstruction errors each associated with a respective label indicating that the original water sample is drinkable or with a respective label indicating that the original water sample is non drinkable (e.g., a label indicating that the original water sample is not drinkable but usable for irrigation and/or surface cleaning, or, a label indicating that the original water sample is not drinkable and not usable for either or both irrigation and/or surface cleaning). The method for setting the one or more thresholds may further comprise determining threshold values (each for a respective one of the one or more thresholds) that best separate clusters, each cluster corresponding to a respective label. By "best separate", it is meant that at least 90% (e.g., 100% in some cases) of the examples of cluster have a reconstruction error one side of a respective threshold value, while at least 90% (e.g., 100% in some cases) of the next cluster have a reconstruction error the other side of the respective threshold value.

In an embodiment, the first threshold is thus set so that at least 90%, or at least 95%, or 100% of the examples respective to a drinkable water sample have a reconstruction error lower than the first threshold, while at least 90%, or at least 95%, or 100% of the examples respective to a water sample not drinkable but usable for irrigation and/or surface cleaning (e.g. for both irrigation and surface cleaning) have a reconstruction error higher than the first threshold. The second threshold is similarly set so that at least 90%, or at least 95% of the examples respective to a water sample not drinkable but usable for irrigation and/or surface cleaning (e.g. for both irrigation and surface cleaning) have a reconstruction error lower than the second threshold, while at least 90%, or at least 95% of the examples respective to a water sample not drinkable and not usable for irrigation and/or surface cleaning (e.g. usable for neither irrigation nor surface cleaning) have a reconstruction error higher than the second threshold.

The setting of one or more thresholds with such discriminating power appears feasible, thanks to the autoencoder having been trained on examples corresponding exclusively to drinkable water.

An implementation of the different steps of the machine-learning method and the assessing method is provided as a detailed illustration of potential ways to implement the methods. The implementation was further tested on a dataset to show the efficacy of the approach.

In the implementation, the autoencoder is a VAE according to the example of FIG. 3, but in variations the autoencoder may present any other type of autoencoder architecture. In the implementation, the encoder of the VAE has an input 300 of dimension 8192. The encoder of the VAE has one hidden state 301 of dimension 400. The VAE has a latent space 302 of dimension 200. The decoder of the VAE has one hidden state 308 of dimension 400. The decoder of the VAE has an output space 309 of dimension 8192. The encoder includes leaky ReLU functions as activation function.

Therefore, in the implementation coded in python, the dimensions of the layers of the VAE may be:

```
input_dim=8192
hidden_dim=400
latent_dim=200
```

and the definition of the VAE may comprise the encoder:

```
# encoder
self.encoder = nn.Sequential(
        nn.Linear(input_dim, hidden_dim),
        nn.LeakyReLU(0.2),
        nn.Linear(hidden_dim, latent_dim),
        nn.LeakyReLU(0.2)
        )
```

and decoder:

```
# decoder
self.decoder = nn.Sequential(
        nn.Linear(2, latent_dim),
        nn.LeakyReLU(0.2),
        nn.Linear(latent_dim, hidden_dim),
        nn.LeakyReLU(0.2),
        nn.Linear(hidden_dim, input_dim),
        nn.Sigmoid()
        )
```

The VAE in the implementation also comprises a loss function that involves the means square error and the Kullback-Leibler divergence, but in variations the autoencoder/VAE may present any other type of loss function (e.g., only the MSE). In the implementation, the loss function may be given by the following python code:

```
# loss function
def loss_function(x, x_hat, mean, log_var):
        reproduction_loss = nn.functional.mse_loss(x, x_hat)
        KLD = - 0.5 * torch.sum(1+ log_var - mean.pow(2) - log_var.exp())
        return reproduction_loss + KLD
```

In the implementation, each training example of the obtained dataset of S120 consists of the fluorescence spectra of a corresponding water sample with respect to spectrometers with four different LEDs, but in variations the dataset may be any WM-dataset, e.g., the training examples of the dataset may comprise the fluorescence spectra of corresponding samples with respect to spectrometers with any number of LEDs, and/or comprise temperature, conductivity, turbidity, redox potential, or a combination thereof. In the implementation, each of the training examples comprising the dataset has 8192 entries corresponding to the different intensities at the different emission wavelengths, with respect to the different LEDs. The dataset consists of 840 training examples.

The implementation includes an additional dataset for testing purposes, but in variations the additional dataset may be absent or be a different dataset. In the implementation, the additional dataset comprises elements consisting of fluorescence spectra of (not necessarily drinkable) water samples with respect to the same spectrometers and with respect to the same four LEDs. Therefore, each element in the additional dataset has 8192 entries corresponding to the different intensities at the different emission wavelengths. In particular, the additional dataset includes 394 elements corresponding to water samples obtained from rivers (water used for agriculture) and 68 elements corresponding to polluted water samples.

The implementation may include normalizing the entries of the training examples in the dataset and the elements of the additional dataset, as well-known in the art.

The implementation further includes separating the dataset into two distinct parts (i.e., two disjoint subsets of the dataset):

- a first part consisting of two thirds of the dataset (called the training dataset); the training dataset, hence, consisting of 840*2/3=560 training examples;
- a second part consisting of one third of the dataset (called the testing dataset); to avoid confusion, the elements of the testing dataset will be referred to as testing examples; the testing dataset, hence, consisting of 840*1/3=280 testing examples.

Therefore, the implementation includes three datasets, the training dataset and the testing dataset, both including only elements corresponding to drinkable water samples, and an additional dataset including elements associated to non-necessarily drinkable water samples. In variations, the step of separating the dataset may be absent or may be done according to any other method.

The implementation involves training the VAE on the training dataset. In the implementation, the batch size is 16 and the number of epochs is 50:

```
train(model, optimizer, epochs=50, device=device)
    Epoch 1    Average Loss: 0.010005923948483542
    Epoch 2    Average Loss: 0.0005108469794161947
    Epoch 3    Average Loss: 0.00024995896348948865
    Epoch 4    Average Loss: 0.00017572098316604215
    Epoch 5    Average Loss: 0.00016046391422552166
    Epoch 6    Average Loss: 0.00017911233012187842
    [...]
    Epoch 45   Average Loss: 5.21196691218339e-05
    Epoch 46   Average Loss: 5.400924339269028e-05
    Epoch 47   Average Loss: 5.3189217931717664e-05
    Epoch 48   Average Loss: 5.255484928270829e-05
    Epoch 49   Average Loss: 5.2864513557270746e-05
    Epoch 50   Average Loss: 5.271167307963718e-05
```

In variations, any other batch size and/or number of epochs may be used.

The implementation (e.g., the trained VAE) was tested/evaluated taking the MSE as reconstruction error. The test was executed on the three different datasets: the dataset comprising the testing dataset (corresponding to drinkable water samples), the dataset corresponding to the water samples coming from rivers and the dataset corresponding to the polluted water samples (both declared as non-drinkable).

The first evaluation was effectuated with box plots. Box plots represent data distributions through quartiles, as is well known in the art. They include a box showing the interquartile range (IQR) from the first quartile (Q1) to the third quartile (Q3), with a line at the median (Q2). Whiskers extend from the box to the smallest and largest data points within a proportion of the IQR (e.g., 1.5 times the IQR). Fliers (i.e., data points past the end of the whiskers) are plotted individually.

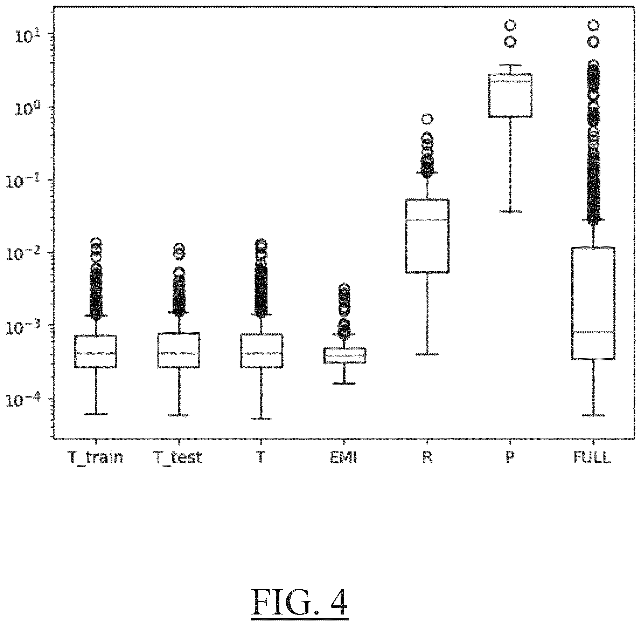

FIG. 4 illustrates the box plot of the reconstruction error of the trained VAE on the three datasets. In FIG. 4, "T_train" corresponds to the training dataset (560 elements) and "T_test" to the testing dataset (280 elements). "R" corresponds to water samples taken from rivers (394 elements), "P" corresponds to polluted water samples (68 elements), and "EMI" corresponds to mineral water samples (360 elements). "FULL" corresponds to the union of all the datasets. The error scale of FIG. 4 is logarithmic. In FIG. 4, the drinkable water samples are well-separated from the polluted water samples, proving the efficacy of the method. The water samples coming from rivers lay in between. This may indicate that some of the water samples may be drinkable or, in general, of superior quality, while other may be of poor quality.

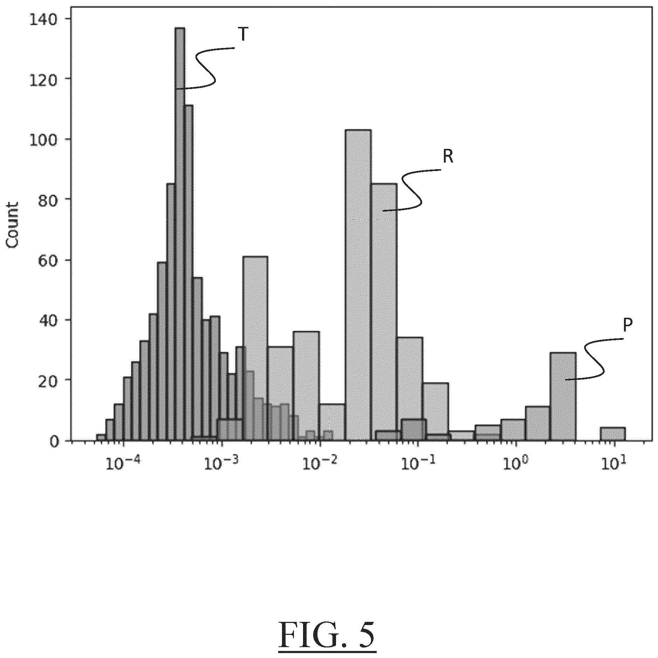

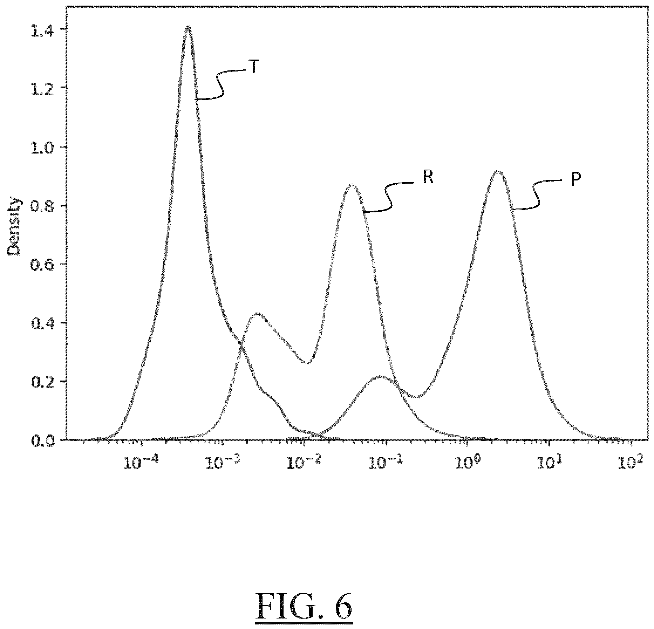

FIG. 5 and 6 illustrate histograms of the reconstruction errors. In both figures the dataset corresponding to all drinkable water samples (training and testing) is denoted by "T", the water coming from the river by "R", and the polluted water by "P"

In the implementation, some of the training examples are flagged as outliers, but in variants there may be no step of finding outliers. Specifically, in the implementation, outliers are defined as those of which z-score is higher than 3, but in variants the outliers may be determined in any other way, e.g., by using other statistical functions and/or thresholds. In the implementation, 13 elements were flagged as outliers and were removed. Further in the implementation, the mean and the standard deviation of the reconstruction error (with respect to the mean square error) of the training data without outliers were computed, denoted by *mean_without_outliers* and *std_without_outliers* respectively. In the implementation, a plurality of thresholds are considered of the form:

$$threshold = mean\_without\_outliers + x*std\_without\_outliers$$

where x is a numerical factor. That is, the threshold is the sum of the mean of the reconstruction error (with respect to the mean square error) of the training data without outliers with a factor x multiplied with the standard variation. In variants, the thresholds may be defined by different formulae.

The implementation was tested/evaluated with the different thresholds. The test was executed on the three different datasets.

Each of FIG.s 7-13 illustrates the confusion matrices with respect to a respective threshold (i.e., with respect to the different values of x). A confusion matrix is a specific table layout that visualizes the performance of a classification algorithm. It displays the true positives (i.e., drinkable water samples labeled as drinkable), true negatives (i.e., non-drinkable water samples labeled as non-drinkable), false positives (i.e., non-drinkable water samples labeled as drinkable), and false negatives (i.e., drinkable water samples labeled as non-drinkable). Specifically, In FIG.s 7-13, the upper rows correspond to the samples of water that are labeled as non-drinkable, the lower rows correspond to the samples of water labeled as drinkable. The left columns correspond to the samples of water declared non-drinkable by the implemented algorithm (i.e., those of which reconstruction error is higher than the marked threshold). The right columns correspond to the samples of water declared drinkable by the implemented algorithm (i.e., those of which reconstruction error is lower than the marked threshold).

Each of FIG.s 7-11 illustrates the confusion matrix with respect to a threshold depending on the factor x and the dataset comprising the testing dataset (corresponding to drinkable water samples), the dataset corresponding to the water samples coming from rivers and the dataset corresponding to the polluted water samples (both declared as non-drinkable).

Each of FIG.s 12-13 illustrates the confusion matrix with respect to a threshold depending on the factor x and the dataset comprising the testing dataset (corresponding to drinkable water samples) and the dataset corresponding to the polluted water samples, that is, in FIG.s 12-13, the dataset corresponding to the water samples coming from rivers is excluded. As it can be seen, in FIG.s 12-13, the implementation was able to distinguish drinkable water samples from polluted water samples, proving the efficacy of the implementation and the assessing method. In FIG.s 7-11, the number of errors (i.e., false positives and negatives) is greater. This may depend on the fact that the water samples coming from rivers are labeled as non-drinkable whereas some of them may be drinkable and/or some of them may be very close to being drinkable (i.e., very low pollution level). This is in accordance with the box plots of FIG. 4 wherein it can be seen that the data corresponding to the datasets T and P are well separated and that the data corresponding to the dataset R lies in between.

The implementation (e.g., the trained VAE) was tested/evaluated with respect to a second reconstruction error: the mean square error only if the real value is higher than the reconstructed value. The second reconstruction error may be advantageous as the reconstructed values correspond to the expression of variabilities in the drinkable data. Therefore, having a real value bellow the reconstructed value may shows that, for that position, the sample present a potential pollution bellow the acceptable value learned by the model. The same analysis was executed as for the previous reconstruction error.

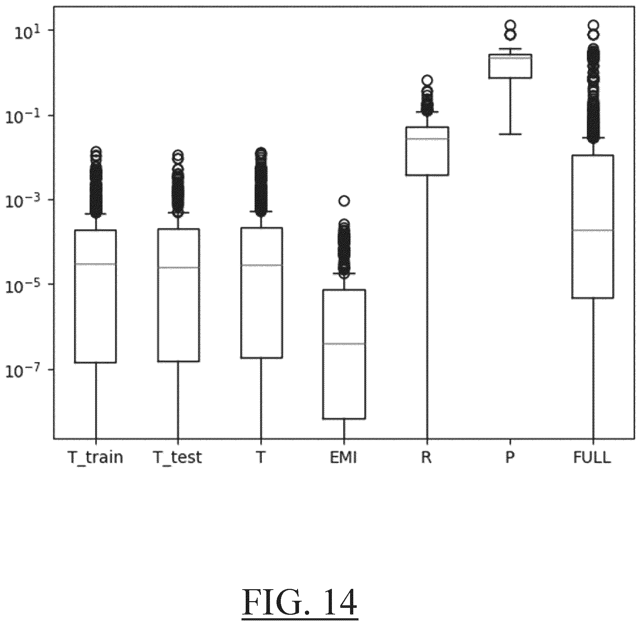

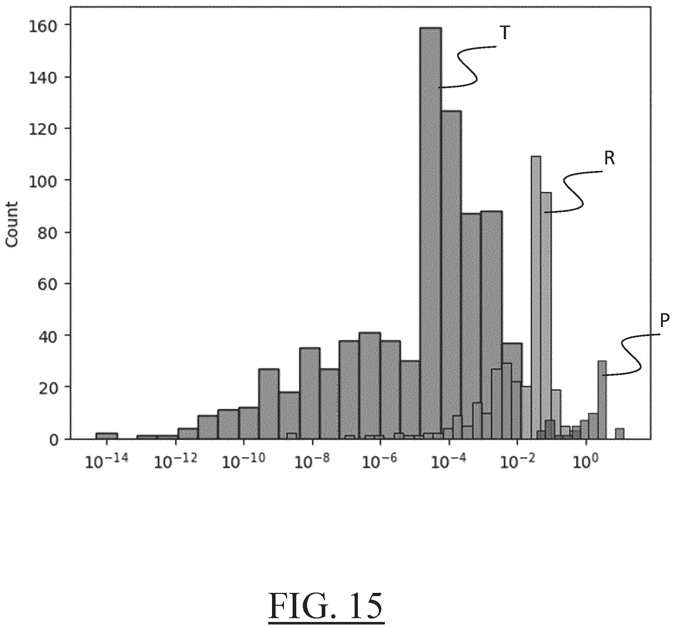

FIG. 14 illustrates the box plot and FIG. 15 illustrates the histogram.

Each of FIG.s 16-17 illustrates the confusion matrix with respect to a threshold depending on the factor x and the dataset comprising the testing dataset, the dataset corresponding to the water samples coming from rivers and to the polluted water samples.

Each of FIG.s 18-19 illustrates the confusion matrix with respect to a threshold depending on the factor x and the dataset comprising the testing dataset and the dataset corresponding to the polluted water samples.

The machine-learning method is a method of machine-learning of a model, which is a deep generative model. As known per se from the field of machine-learning, the processing of an input by a model includes applying operations to the input, the operations being defined by data including weight values or parameters. Learning a model (e.g., a neural network, an autoencoder, or a variational autoencoder) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 500 or 1000. In the context of the present disclosure, by "training is performed over the dataset", it is meant that the dataset is a learning/training dataset of the model, based on which the values of the weights/parameters are set. In the present disclosure, the training dataset is the obtained dataset of training examples, on which the deep generative model is learnt/trained. In implementations, the training dataset consists of several hundreds of examples each corresponding to a different water sample.

As known per se from machine-learning, a neural network may be defined by its architecture, parameters, and hyperparameters. The architecture consists of layers, starting with the input layer of which neuron count may be determined by the dimensionality of the input data. This layer is followed by several hidden layers with a given number of neurons and activation functions. These layers and neurons define the network's depth and width, while the activation functions may introduce non linearity into the model. The output layer may have as many neurons as the variables in the output data. The interconnections between these layers defines the topology of the neural network. The parameters of the neural network are the learnable weights and biases, which are determined in the training process. In contrast, the hyperparameters are pre-defined settings that are not learnt from the training data. These encompasses the number of hidden layers, neurons per layer and much more. To train a neural network, at least two settings may be defined. First, a loss function, which is a metric that measures the error between the training data and the model's prediction, such as the mean square error (MSE). Second, an optimizer, which modifies the model's weights and biases during the training process to minimize the loss function. Each optimizer has its own set of hyperparameters.

The machine-learning method may comprise, prior to training, a step of preprocessing the dataset. The dataset may consist of elements of which entries are numbers (e.g., integers, real number, non-negative numbers, numbers in a precise interval) and the machine learning method may include applying mathematical operations to the entries. For example, the machine-learning method may comprise modifying each entry to ensure that they have a predetermined mean and/or standard variation, e.g., to obtain that all the entries have the same mean and/or standard variation. The preprocessing may also include completing the dataset. Indeed, the obtained or provided dataset may not be complete, i.e., some of the elements of the dataset may have invalid entries (e.g., some of the entries may be missing). The machine-learning method may therefore include determining the missing entries prior to the training.

The machine-learning method may also include, prior to training, separating the training dataset into two parts. For example, the first part may include more than 50% or 60% of the dataset and the second dataset may consist of the complement. The first part may be obtained by choosing randomly the given percentage of the dataset. The first part of the dataset may still be called the training dataset, whereas the second part may be called the testing dataset. The machine-learning method may further include training the model (e.g., the autoencoder) only on the first part, the training dataset. The machine-learning method may include applying the learnt model (e.g., the learnt autoencoder) to the elements of the testing dataset and applying a loss function, or another error function, to the result of the testing. The result of the test may be taken into account further in the method, in a method of use (e.g., in the assessing method, for example, for setting the thresholds).

The method is computer-implemented. This means that steps (or substantially all the steps) of the method are executed by at least one computer, or any system alike. Thus, steps of the method are performed by the computer, possibly fully automatically, or semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database). The system may further comprise instruments used to obtain the measurement data comprising a measurement value of the one or more predetermined physical parameters for an input water sample.

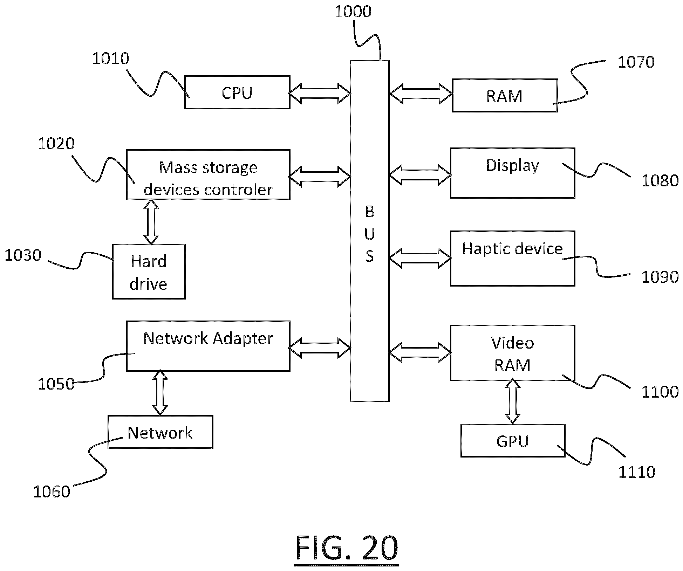

FIG. 20 shows an example of the system, wherein the system is a client computer system, e.g., a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

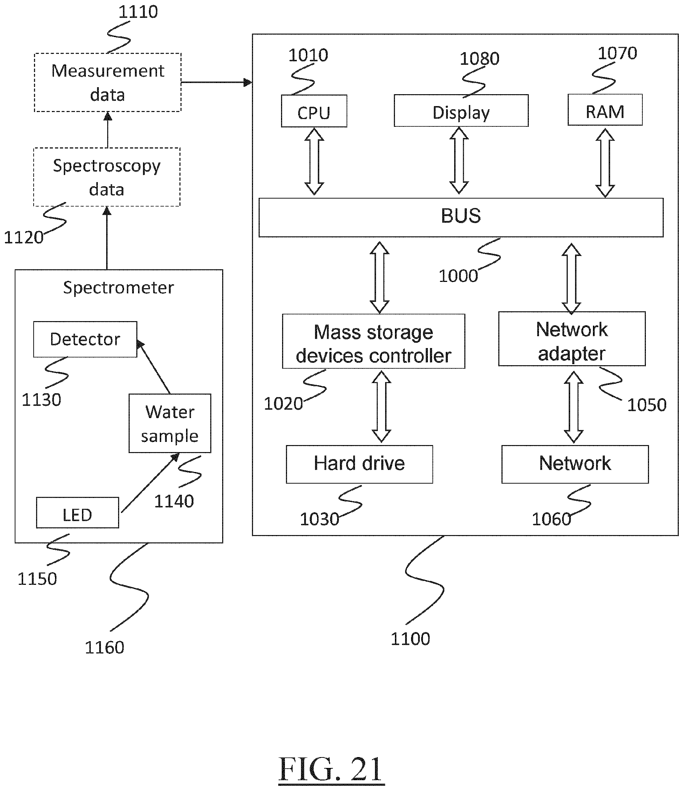

The client computer system may further comprise or be coupled to measuring devices (not shown in FIG. 20) used to obtain the measurement data comprising a measurement value of the one or more predetermined physical parameters for an input water sample obtained at S20. FIG. 21 illustrates an example of the system, wherein the system is a client computer system 1100 as the one in FIG. 20, connected with an emission spectrometer 1160. The spectrometer includes a LED 1150. The LED irradiates with light the water sample 1140. A detector 1130 detects the light emitted by the water sample. This spectroscopy data 1120 is analyzed to obtain the measurement data 1100 that is sent to the computer system 1100.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. The apparatus may comprise instruments used to obtain the measurement data comprising a measurement value of the one or more predetermined physical parameters for an input water sample.

Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1.   A computer-implemented method for assessing quality of a water sample, comprising:

- obtaining (S10) an autoencoder having been trained on a dataset comprising training examples, each training example comprising a ground truth value of one or more predetermined physical parameters for a respective drinkable water sample, the dataset consisting exclusively of training examples respective to drinkable water samples;
- obtaining (S20) measurement data, the measurement data comprising a measurement value of the one or more predetermined physical parameters for an input water sample;
- applying (S30) the autoencoder to the measurement data, thereby obtaining reconstructed data;
- computing (S40) a reconstruction error between the measurement data and the reconstructed data;
- comparing (S50) the reconstruction error to one or more thresholds; and
- determining (S60) a level of quality of the input water sample, based on the comparison.

2.   The method of claim 1, wherein the autoencoder is a variational autoencoder (VAE).

3.   The method of claim 1 or 2, wherein the one or more predetermined physical parameters include one or more optical parameters.

4. The method of claim 3, wherein the one or more optical parameters include one or more spectrometry parameters.

5. The method of claim 4, wherein the one or more spectrometry parameters include one or more fluorescence parameters.

6. The method of claim 5, wherein the one or more fluorescence parameters include fluorescence spectra with respect to one or more LEDs.

7. The method of claim 6, wherein the number of LEDs is higher than or equal to 2, and/or lower than or equal to 6.

8. The method of claim 5, wherein the one or more fluorescence parameters include an excitation-emission matrix obtained by fluorescence spectroscopy.

9. The method of any of claims 1 to 8, wherein the one or more predetermined physical parameters include temperature, conductivity, turbidity, redox potential, or a combination thereof.

10. The method of any of claims 1 to 9, wherein the one or more thresholds comprise a first threshold and a second threshold, the second threshold being higher than the first threshold, the input water sample being determined to be drinkable when the reconstruction error is below the first threshold, the input water sample being determined to be usable for irrigation and/or surface cleaning when the reconstruction error is above the first threshold and below the second threshold, and the input water sample being determined to not be drinkable and not be usable for either or both of irrigation and surface cleaning when the reconstruction error is above the second threshold.

11. The method of any of claims 1 to 10, wherein the reconstruction error is a function of a mean square error and/or of a mean absolute error.

12. The method of any of claims 1 to 11, wherein at least one of the one or more thresholds is equal to a sum between:

   - a mean value of reconstruction errors over at least part of the dataset, and
   - a standard deviation of reconstruction errors over the at least part of the dataset multiplied by a factor higher than or equal to 0.5 and/or lower or equal to 20.

13. The method of any of claims 1 to 12, wherein the method further comprises:

   - obtaining the dataset; and
   - the training of the autoencoder based on the dataset.

14. A method for machine-learning an autoencoder usable in a method for assessing quality of a water sample according to any one of claims 1 to 12, the machine-learning method comprising:

   - obtaining (S110) a dataset comprising training examples, each training example comprising a ground truth value of one or more predetermined physical parameters for a respective drinkable water sample, the dataset consisting exclusively of training examples respective to drinkable water samples; and
   - training (S120) the autoencoder based on the dataset.

15. An autoencoder machine-learnt according to the method of claim 14.

16. A computer-program comprising instructions which, when the program is executed on a computer, cause the computer to carry out the method of any one of claims 1 to 13.

17. A computer-program comprising instructions which, when the program is executed on a computer, cause the computer to carry out the method of claim 14.

18. A computer-readable storage medium having recorded thereon the autoencoder of claim 15, the computer program of claim 14, and/or the computer program of claim 17.

19. A system comprising a processor coupled to a memory, the memory having recorded thereon the autoencoder of claim 15, the computer program of claim 16, and/or the computer program of claim 17.

| Obtaining an autoencoder having been trained on a dataset comprising training examples | — S10 |

| Obtaining measurement data | — S20 |

| Applying the autoencoder to the measurement data, thereby obtaining reconstructed data | — S30 |

| Computing the reconstruction error | — S40 |

| Comparing the reconstruction error to one or more thresholds | — S50 |

| Determining a level of quality of the input water sample | — S60 |

FIG. 1

Obtaining a dataset comprising training examples, each training
example comprising a ground truth value of one or more
predetermined physical parameters for a respective drinkable water
sample

S110

Training the autoencoder based on the dataset

S120

FIG. 2

FIG. 3

FIG. 4

FIG. 5

FIG. 6

confusion_by_threshold(x=0.5)
Threshold: 0.0010350127218136012
Number of errors in the train set with this threshold: 96
Accuracy = 0.9231805929919138
Precision = 0.9911894273127754
Recall = 0.8035714285714286
AUC from MAE= 0.8996212121212122
AUC = 0.9837816944959801

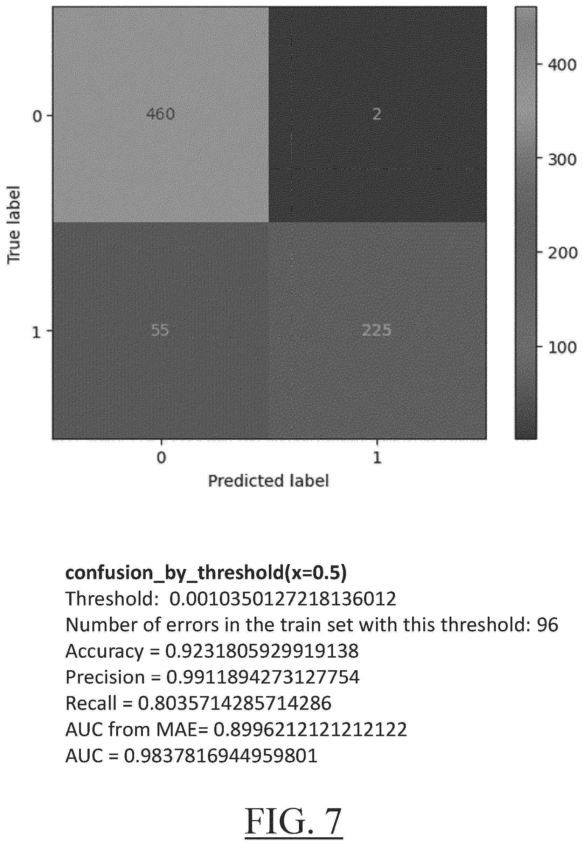

FIG. 7

**confusion_by_threshold(x=0.75)**
Threshold: 0.001223339534940992
Number of errors in the train set with this threshold: 87
Accuracy = 0.9272237196765498
Precision = 0.9870689655172413
Recall = 0.8178571428571428
AUC from MAE= 0.9056818181818181
AUC = 0.9837816944959801

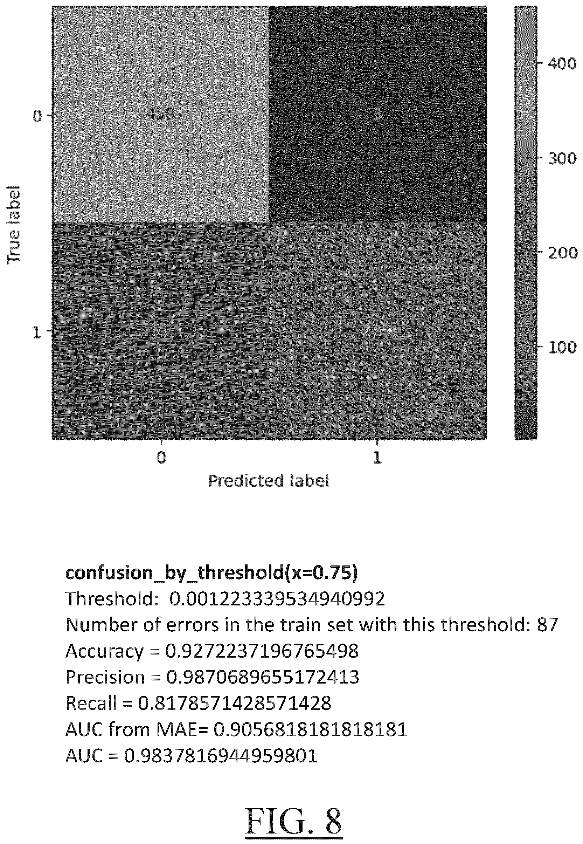

# FIG. 8

confusion_by_threshold(x=1)
Threshold: 0.0014116663480683827
Number of errors in the train set with this threshold: 76
Accuracy = 0.9299191374663073
Precision = 0.9710743801652892
Recall = 0.8392857142857143
AUC from MAE= 0.9120670995670996
AUC = 0.9837816944959801

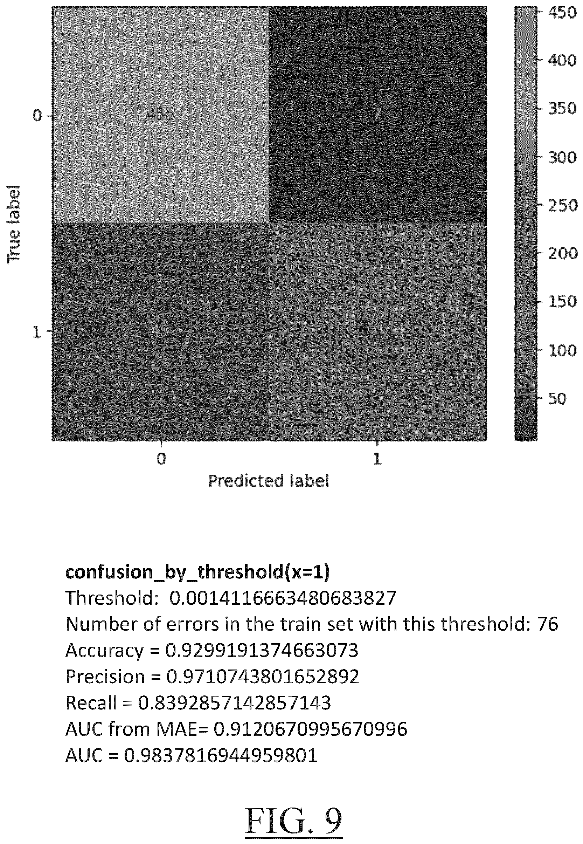

FIG. 9

**confusion_by_threshold(x=2)**
Threshold:  0.002164973600577946
Number of errors in the train set with this threshold: 45
Accuracy = 0.9258760107816711
Precision = 0.889273356401384
Recall = 0.9178571428571428
AUC from MAE= 0.9242965367965368
AUC = 0.9837816944959801

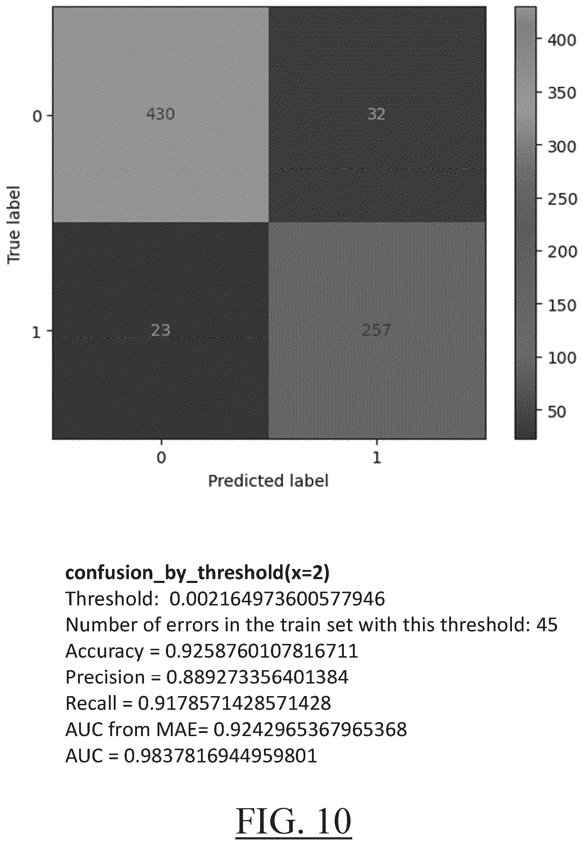

# FIG. 10

**confusion_by_threshold(x=3)**
Threshold: 0.002918280853087509
Number of errors in the train set with this threshold: 32
Accuracy = 0.889487870619946
Precision = 0.7964071856287425
Recall = 0.95
AUC from MAE= 0.9014069264069264
AUC = 0.9837816944959801

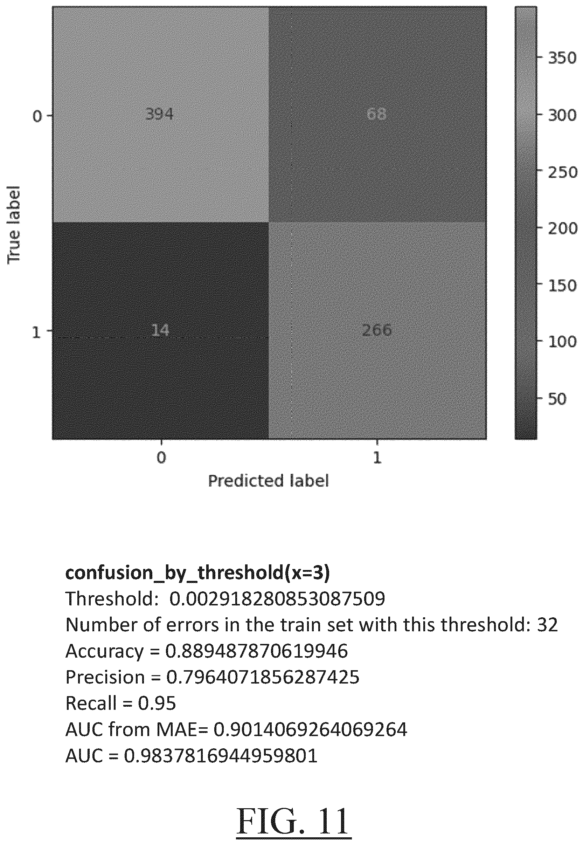

# FIG. 11

**confusion_by_threshold(x=3)**
Threshold: 0.002918280853087509
Number of errors in the train set with this threshold: 32
Accuracy = 0.9597701149425287
Precision = 1.0
Recall = 0.95
AUC from MAE= 0.975
AUC = 1.0

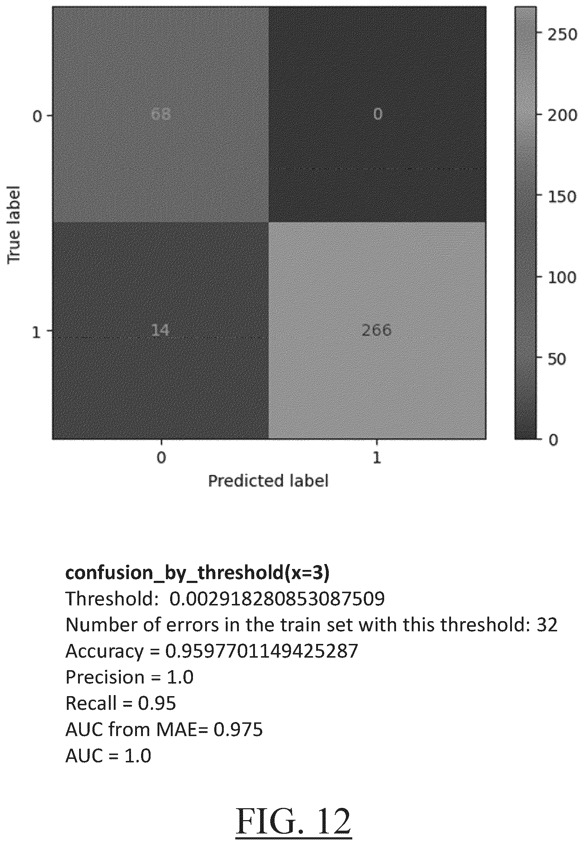

FIG. 12

**confusion_by_threshold(x=15)**
Threshold: 0.011957967883202268
Number of errors in the train set with this threshold: 1
Accuracy = 1.0
Precision = 1.0
Recall = 1.0
AUC from MAE= 1.0
AUC = 1.0

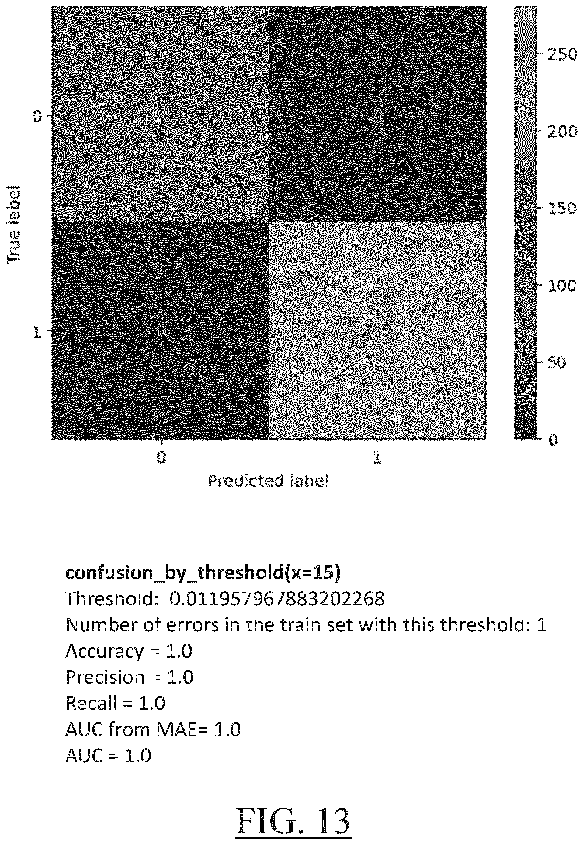

# FIG. 13

FIG. 14

FIG. 15

**confusion_by_threshold(x=0)**
Threshold:  0.0002971332338036784
Number of errors in the train set with this threshold: 122
Accuracy = 0.8679245283018868
Precision = 0.85546875
Recall = 0.7821428571428571
AUC from MAE= 0.8510281385281385
AUC = 0.940480055658627

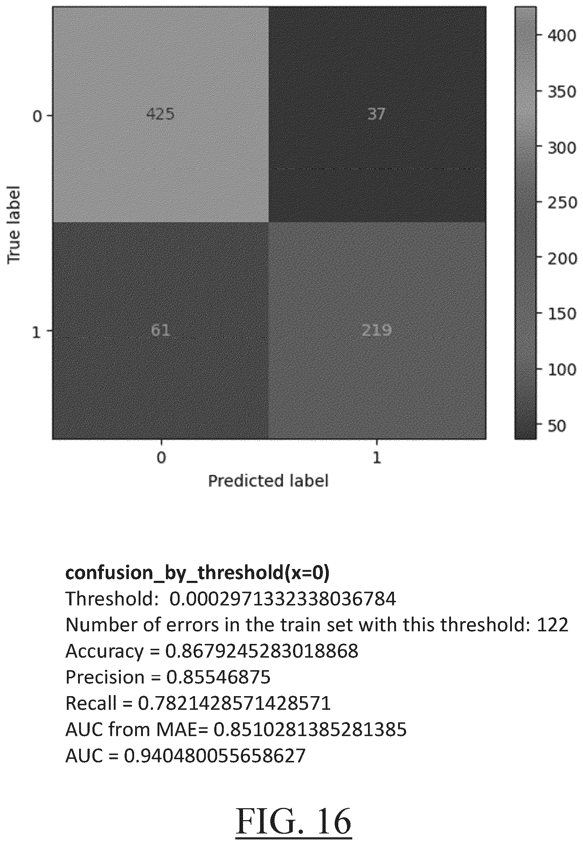

# FIG. 16

**confusion_by_threshold(x=0.5)**
Threshold: 0.000640179978028629
Number of errors in the train set with this threshold: 92
Accuracy = 0.8746630727762803
Precision = 0.8424908424908425
Recall = 0.8214285714285714
AUC from MAE= 0.8641774891774892
AUC = 0.940480055658627

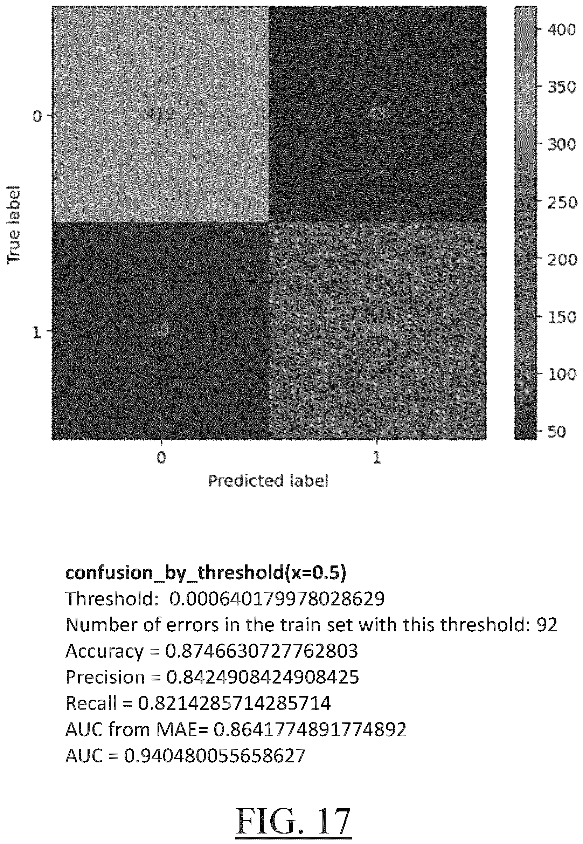

# FIG. 17

**confusion_by_threshold(x=3)**
Threshold:  0.0023554136991533817
Number of errors in the train set with this threshold: 33
Accuracy = 0.9540229885057471
Precision = 1.0
Recall = 0.9428571428571428
AUC from MAE= 0.9714285714285714
AUC = 1.0

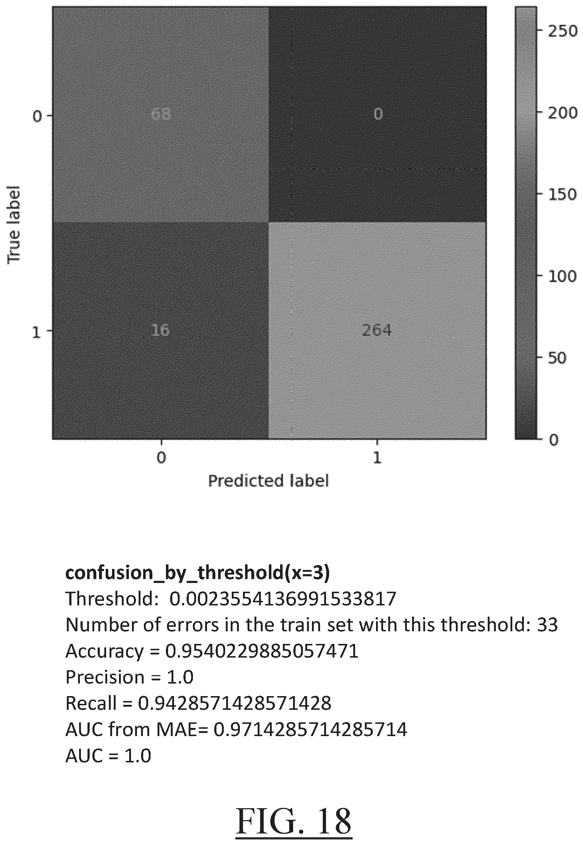

# FIG. 18

**confusion_by_threshold(x=16)**
Threshold: 0.011274629049002095
Number of errors in the train set with this threshold: 2
Accuracy = 1.0
Precision = 1.0
Recall = 1.0
AUC from MAE= 1.0
AUC = 1.0

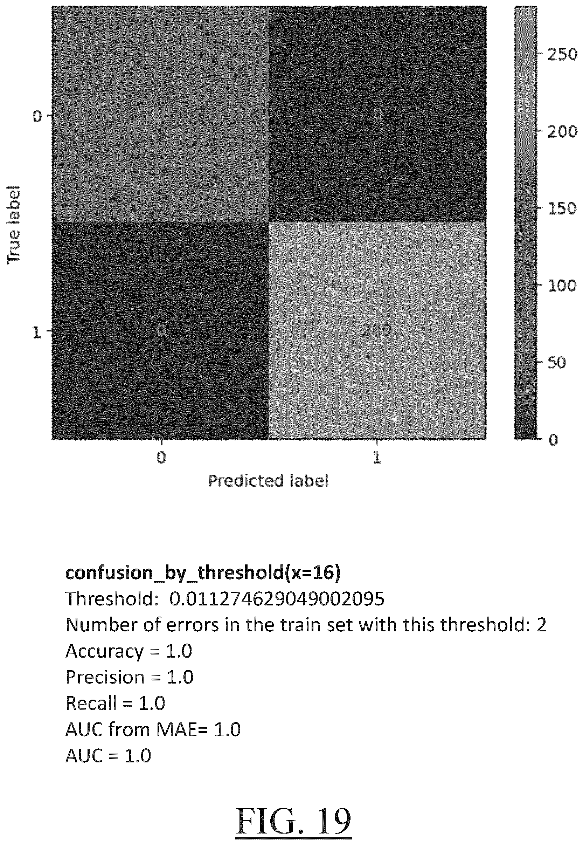

FIG. 19

1000

1010

CPU

1070

RAM

1020

Mass storage
devices controler

Display

1080

B
U
S

1030

Hard
drive

Haptic device

1090

Network Adapter

Video
RAM

1050

1100

Network

GPU

1060

1110

# FIG. 20

FIG. 21

Europäisches
Patentamt

European
Patent Office

Office européen
des brevets

## EUROPEAN SEARCH REPORT

**Application Number**

EP 24 30 6930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QU HONGCHUN ET AL: "Water quality Anomaly detection based on optimally reconfigured convolutional autoencoder", 2022 INTERNATIONAL CONFERENCE ON WEARABLES, SPORTS AND LIFESTYLE MANAGEMENT (WSLM), IEEE, 14 January 2022 (2022-01-14), pages 137-141, XP034290371, DOI: 10.1109/WSLM54683.2022.00031 [retrieved on 2023-02-08] * title * * abstract * * table III * * figures 4, 6 * * paragraphs [0III], [00IV] * | 1,2, 9-11, 13-19 | INV. G01N21/64 |
| X | SHI JIEGEN ET AL: "Anomaly detection of organic pollution in drinking water based on fluorescence spectroscopy and stacked autoencoder", 2020 CHINESE AUTOMATION CONGRESS (CAC), 6 November 2020 (2020-11-06), pages 6223-6227, XP093270058, DOI: 10.1109/CAC51589.2020.9327511 ISBN: 978-1-7281-7687-1 Retrieved from the Internet: URL:https://ieeexplore.ieee.org/stampPDF/g etPDF.jsp?tp=&arnumber=9327511&ref=aHR0cHM 6Ly9pZWVleHBsb3JlLmllZWUub3JnL2Fic3RyYWN0 L2RvY3VtZW50LzkzMjc1MTE/Y2FzYV90b2tlbj10Ym1 6RV9jalZuWUFBQUФBQlRHbFNFBKLWNsZ1hOTVIyb VBpaDN1Y 0FISVNLZH1Se1J4d0J5UFBWR2VleF16d3J hQ2tXV21jTkZVWk5DWExCCZFVLZV1sOG14aw==> * title * * abstract * * figures 1, 2 * * paragraph [00II] * | 1-8,10, 12,14-19 | |

TECHNICAL FIELDS
SEARCHED        (IPC)

G01N

The present search report has been drawn up for all claims

| Place of search | Date of completion of the search | Examiner |
|---|---|---|
| Munich | 23 April 2025 | Brauer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 30 6930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DHAKAL RAJU ET AL: "UAV Fault and Anomaly Detection Using Autoencoders", 2023 IEEE/AIAA 42ND DIGITAL AVIONICS SYSTEMS CONFERENCE (DASC), IEEE, 1 October 2023 (2023-10-01), pages 1-8, XP034466807, DOI: 10.1109/DASC58513.2023.10311126 [retrieved on 2023-11-10] * the whole document * | 2 | |
| A | AKRAMI HALEH ET AL: "A robust variational autoencoder using beta divergence", KNOWLEDGE-BASED SYSTEMS, ELSEVIER, AMSTERDAM, NL, vol. 238, 10 December 2021 (2021-12-10), XP086928254, ISSN: 0950-7051, DOI: 10.1016/J.KNOSYS.2021.107886 [retrieved on 2021-12-10] * the whole document * | 2 | |
| A | CN 116 165 148 A (GUANGDONG COMMUNICATION POLYTECHNIC) 26 May 2023 (2023-05-26) * the whole document * | 1-19 | TECHNICAL FIELDS SEARCHED (IPC) |
| A | CN 118 070 234 A (UNIV HEBEI ENGINEERING) 24 May 2024 (2024-05-24) * the whole document * | 1-19 | |
| A | CN 117 990 871 A (UNIV CHONGQING JIAOTONG; CHONGQING ACADEMY OF ECO ENV SCIENCES) 7 May 2024 (2024-05-07) * the whole document * | 1-19 | |

-/--

The present search report has been drawn up for all claims

| Place of search | Date of completion of the search | Examiner |
|---|---|---|
| Munich | 23 April 2025 | Brauer, Jan |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PÉREZ-BELTRÁN C H ET AL: "Artificial intelligence and water quality: From drinking water to wastewater", TRAC TRENDS IN ANALYTICAL CHEMISTRY, ELSEVIER, AMSTERDAM, NL, vol. 172, 15 February 2024 (2024-02-15), XP087481243, ISSN: 0165-9936, DOI: 10.1016/J.TRAC.2024.117597 [retrieved on 2024-02-15] * the whole document * ----- | 1-19 | |
| A | YU JIE ET AL: "Detection and Identification of Organic Pollutants in Drinking Water from Fluorescence Spectra Based on Deep Learning Using Convolutional Autoencoder", WATER, vol. 13, no. 19, 25 September 2021 (2021-09-25), page 2633, XP093269920, CH ISSN: 2073-4441, DOI: 10.3390/w13192633 * the whole document * ----- | 1-19 | |
| A | EDUN AYOBAMI S ET AL: "Anomaly Detection of Disconnects Using SSTDR and Variational Autoencoders", IEEE SENSORS JOURNAL, IEEE, USA, vol. 22, no. 4, 6 January 2022 (2022-01-06), pages 3484-3492, XP011900276, ISSN: 1530-437X, DOI: 10.1109/JSEN.2022.3140922 [retrieved on 2022-02-10] * the whole document * ----- | 2 | |

**TECHNICAL FIELDS SEARCHED (IPC)**

The present search report has been drawn up for all claims

| Place of search | Date of completion of the search | Examiner |
|---|---|---|
| Munich | 23 April 2025 | Brauer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**page 3 of 3**

## ANNEX TO THE EUROPEAN SEARCH REPORT
## ON EUROPEAN PATENT APPLICATION NO.

EP 24 30 6930

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | | Publication date | Patent family member(s) | Publication date |
|---|---|---|---|---|
| CN 116165148 | A | 26-05-2023 | NONE | |
| CN 118070234 | A | 24-05-2024 | NONE | |
| CN 117990871 | A | 07-05-2024 | NONE | |

EPO FORM P0459

For more details about this annex : see Official Journal of the European Patent Office, No. 12/82